# EUROPÄISCHE PATENTSCHRIFT

(11) **EP 1 615 795 B1**
(45) Veröffentlichungstag und Bekanntmachung des Hinweises auf die Patenterteilung: **07.01.2009**
(21) Anmeldenummer: 04724248.2
(22) Anmeldetag: 30.03.2004
(51) Int. Cl.: B60N 2/07, B60N 2/30

(54) **SITZLÄNGSFÜHRUNG FÜR EINEN KRAFTFAHRZEUGSITZ**
LONGITUDINAL GUIDING ELEMENT FOR A MOTOR VEHICLE SEAT
DISPOSITIF DE GUIDAGE LONGITUDINAL POUR UN SIEGE DE VEHICULE AUTOMOBILE

(30) Priorität: 10.04.2003 DE 10317239
(43) Veröffentlichungstag der Anmeldung: 18.01.2006
(73) Patentinhaber: Brose Fahrzeugteile GmbH & Co. KG, Coburg, 96450 Coburg (DE)
(72) Erfinder: FISCHER, Matthias, 96317 Kronach (DE); HOFMANN, Jochen, 98257 Marktgraitz (DE)
(74) Vertreter: Ninnemann, Detlef
(86) Internationale Anmeldenummer: PCT/DE2004/000688
(87) Internationale Veröffentlichungsnummer: WO 2004/091962

(56) Entgegenhaltungen:
- EP-A- 0 088 015
- DE-A- 4 433 519
- US-A- 2 240 143
- PATENT ABSTRACTS OF JAPAN Bd. 1996, Nr. 02, 29. Februar 1996 (1996-02-29) -& JP 07 257240 A (ARACO CORP), 9. Oktober 1995 (1995-10-09)

## Beschreibung

Die Erfindung betrifft eine Sitzlängsführung für einen Kraftfahrzeugsitz nach dem Oberbegriff des Patentanspruchs 1.

Eine derartige Sitzlängsführung umfasst zwei in Schienenlängsrichtung erstreckte Führungselemente sowie eine Führungseinrichtung, mittels der das eine Führungselement relativ zu dem anderen Führungselement in Schienenlängsrichtung verschieblich ist. Indem das eine dieser beiden Führungselemente zur Aufnahme eines Polsterträgers eines Kraftfahrzeugssitzes vorgesehen ist und das andere Führungselement mit dem Karosserieboden eines Kraftfahrzeugs verbindbar ist, lässt sich durch eine Relativbewegung des einen Führungselementes zu dem anderen Führungselement die Position des entsprechenden Kraftfahrzeugsitzes in Sitzlängsrichtung einstellen. Unter der Sitzlängslängsrichtung wird dabei diejenige Richtung verstanden, entlang der sich die Oberschenkel eines auf dem entsprechenden Fahrzeugsitz sitzenden Fahrzeugsinsassen in normaler Sitzposition erstrecken.

Die genannte Führungseinrichtung weist zwei in Sitzlängsrichtung hintereinander angeordnete Kulissenführungen auf, die jeweils durch eine Führungskulisse und einen in der jeweiligen Führungskulisse geführten Führungszapfen gebildet werden. Bei einer Verschiebung des einen Führungselementes relativ zu dem anderen Führungselement in Sitzlängsrichtung kommt es demnach zu einer Relativbewegung der Führungszapfen in der jeweils zugeordneten Führungskulisse. Diese Relativbewegung erfolgt unabhängig davon, ob die Führungskulisse oder der Führungszapfen an dem karosseriefesten Führungsteil angeordnet ist. In jedem Fall ist jeweils eine dieser beiden Funktionsgruppen am karosseriefesten und die andere am längsverschieblichen Führungselement angeordnet.

Aus der EP 0 088 015 A ist eine Sitzlängsführung für ein Kraftfahrzeugsitz bekannt, die zwei Führungsschienen und eine Führungseinrichtung aufweist, um den Kraftfahrzeugsitz in Fahrzeuglängsrichtung verschieben zu können. Die Führungseinrichtung weist zwei in Längsrichtung hintereinander angeordnete Kulissenführungen auf, die jeweils aus einer Führungskulisse und einem Führungszapfen bestehen.

Aus der US 2 240 143 A ist ein Kraftfahrzeugsitz mit einer Sitzlängsführung bekannt. Die Sitzlängsführung weist zwei Führungselemente und eine Führungseinrichtung auf, mit der die Führungselemente relativ zueinander in Sitzlängsrichtung verschoben werden können. Die Führungseinrichtung besteht aus zwei in Sitzlängsrichtung hintereinander angeordnete Kulissenführungen.

Bei derartigen Sitzlängsführungen besteht das Problem, dass bei einem - verglichen mit der Gesamtlänge des jeweiligen Führungselementes - geringen Abstand der beiden Führungszapfen in Sitzlängsrichtung die Gefahr einer Beschädigung der Anordnung im Fall starker Belastungen des Fahrzeugsitzes mit einem entsprechenden Drehmoment besteht.

Der Erfindung liegt daher das Problem zugrunde, eine Sitzlängsführung der eingangs genannten Art zu schaffen, die sich durch eine erhöhte Stabilität gegenüber Drehmomentbelastungen auszeichnet.

Dieses Problem wird erfindungsgemäß dadurch gelöst, dass die erste Kulissenführung durch eine an der einen Schiene vorgesehene Führungskulisse und einen an der anderen Schiene vorgesehenen Führungszapfen gebildet wird und die zweite Kulissenführung durch einen an der einen Schiene vorgesehenen Führungszapfen und eine an der anderen Schiene vorgesehene Führungskulisse gebildet wird.

Mit anderen Worten ausgedrückt sind an der einen Schiene in Sitzlängsrichtung betrachtet eine Führungskulisse der ersten Kulissenführung und ein Führungszapfen der zweiten Kulissenführung hintereinander angeordnet und an der anderen Schiene ein Führungszapfen der ersten Kulissenführung und eine Führungskulisse der zweiten Kulissenführung hintereinander angeordnet. Hierdurch wird erreicht, dass sich der Abstand zwischen den beiden Führungszapfen bei einer Verschiebung der beiden Führungselemente zueinander in Sitzlängsrichtung ändert. Dies ermöglicht wiederum eine derartige Ausbildung der Führungseinrichtung insgesamt, dass in solchen Sitzlängspositionen, in denen eine besondere Stabilität gegenüber äußeren Drehmomenten erforderlich ist, ein besonders großer Abstand der beiden Führungszapfen in Sitzlängsrichtung vorgesehen sein kann.

Handelt es sich bei dem entsprechenden Fahrzeugsitz um einen Rücksitz der zweiten oder dritten Sitzreihe eines Kraftfahrzeugs, bei dem eine Verschiebung in Sitzlängsrichtung immer dann vorgenommen wird, wenn der Einstieg von Passagieren ins Fahrzeug erleichtert werden soll oder wenn im Fond des Fahrzeugs zusätzlicher Transportraum zur Verfügung gestellt werden soll, dann ist eine besondere Stabilität der Anordnung jeweils dann erforderlich, wenn sich die Führungselemente in einer Relativposition, in der der entsprechende Fahrzeugsitz zur Aufnahme eines Fahrzeuginsassen eingerichtet ist. Befinden sich die Führungselemente demgegenüber in einer Relativposition, in der lediglich das Einsteigen in das Fahrzeug erleichtert oder zusätzlicher Transportraum zur Verfügung gestellt werden soll, bestehen deutlich geringere Anforderungen an die Stabilität der Anordnung. Daher sind die Führungskulissen und die Führungszapfen derart anzuordnen, dass im erstgenannten Fall ein besonders großer Abstand zwischen den Führungszapfen in Sitzlängsrichtung besteht.

Wenn beispielsweise die beiden Führungselemente in Schienenlängsrichtung zwischen einer ersten und einer zweiten Endposition relativ zueinander verschiebbar sind, wobei die eine Endposition einer Position entspricht, in der der entsprechende Fahrzeugsitz zur Aufnahme eines Fahrzeuginsassen dienen soll, und die andere Endposition einer Position entspricht, in der das Einsteigen in das Fahrzeug erleichtert wird und/oder zusätzlicher Transportraum zur Verfügung gestellt werden soll, und wenn sich diese beiden Endpositionen dadurch einstellen lassen, dass sich die beiden Führungskulissen der Führungseinrichtung jeweils zwischen einem in Sitzlängsrichtung vorderen und einem in Sitzlängsrichtung hinteren Anschlag erstrecken, der die Bewegung des jeweiligen Führungszapfens in der Führungskulisse begrenzt, dann liegt vorzugsweise in der einen Endposition der beiden Führungselemente der Führungszapfen der in Schienenlängsführung vorderen Kulissenführung am vorderen Anschlag der zugeordneten Führungskulisse an und der Führungszapfen der in Schienenlängsrichtung hinteren Kulissenführung am hinteren Anschlag der Führungskulisse. Hierdurch ist in dieser Endposition der größtmögliche Abstand zwischen den beiden Führungszapfen eingestellt, der eine entsprechend große Stabilität gewährleistet. Diese Endposition der Führungselemente entspricht demnach einer Sitzlängsposition, in der der entsprechende Fahrzeugsitz zur Aufnahme eines Fahrzeuginsassen dient.

In der anderen Endposition der beiden Führungselemente liegt demgegenüber der Führungszapfen der in Schienenlängsrichtung vorderen Kulissenführung an deren hinterem Anschlag an und der Führungszapfen der in Schienenlängsrichtung hinteren Kulissenführung an deren vorderem Anschlag. Dies entspricht dem kleinstmöglichen Abstand der beiden Führungszapfen, so dass hier eine geringere Stabilität gegenüber Drehmomentbelastungen besteht. In dieser Endposition der beiden Führungselemente ist der Fahrzeugsitz daher vorzugsweise lediglich zur Schaffung eines vergrößerten Transportraumes oder dergleichen eingestellt und vorgesehen.

Die beiden Führungselemente sind vorzugsweise als Sitzseitenteile ausgebildet, die quer zur Sitzlängsrichtung horizontal nebeneinander angeordnet sind und dadurch ein inneres und ein äußeres Führungselement bilden, wobei vorzugsweise das äußere Führungselement karosseriefest anzuordnen ist und das innere Führungselement zur Aufnahme des Polsterträgers dient. Die genannten Führungselemente sind vorzugsweise paarweise an beiden äußeren Längsseiten eines Kraftfahrzeugsitzes angeordnet.

Zur Verriegelung der Sitzlängsführung insbesondere in ihren beiden Endpositionen ist eine Verriegelungseinrichtung vorgesehen, die sich zur Ausübung einer Sitzlängsverstellung mittels eines hierfür vorgesehenen Entriegelungshebels entriegeln lässt.

Für eine definierte Führung der Führungszapfen in den zugeordneten Kulissenführungen sind die Führungszapfen in der jeweiligen Kulissenführung einerseits entlang der vertikalen Achse senkrecht zur Sitzlängsrichtung und andererseits entlang einer ersten horizontalen Richtung (horizontalen Querrichtung) senkrecht zur Sitzlängsrichtung abgestützt. Letzteres wird dadurch ermöglicht, dass die Führungszapfen die jeweilige Kulissenführung durchgreifen und mit einem verbreiterten Endabschnitt am Rand der zugeordneten Kulissenführung anliegen. Entlang der entgegengesetzten horizontalen Richtung können demgegenüber die beiden Führungselemente aneinander abgestützt sein.

Um die beschriebene Abstützung der einzelnen Elemente der Führungseinrichtung aneinander zu ermöglichen, sind an den Führungskulissen entsprechende Gleitbereiche ausgebildet.

Gemäß einer bevorzugten Ausführungsform der Erfindung werden die Gleitbereiche durch einen separaten, vorzugsweise aus Kunststoff bestehenden Gleiter gebildet, der an der jeweiligen Kulissenführung festgelegt ist. Dieser Gleiter weist vorzugsweise zwei einander gegenüberliegende Gleitflächen zum Abstützen des jeweiligen Führungszapfens entlang der vertikalen Achse auf sowie zwei weitere, einander gegenüberliegende Gleitflächen zum Abstützen des Führungszapfens entlang einer ersten horizontalen Richtung und zum Abstützen der Führungselemente aneinander entlang der zweiten, entgegengesetzten, horizontalen Richtung quer zur Sitzlängsrichtung.

Die Gleitbereiche des Gleiters erstrecken sich bevorzugt nur über einen Teil der Ausdehnung der jeweiligen Führungskulisse in Sitzlängsrichtung, so dass derjenige Endabschnitt der Führungskulisse, in dem der zugeordnete Führungszapfen dann aufgenommen ist, wenn sich die Sitzlängsführung in einer Endposition befindet, in der der entsprechende Fahrzeugsitz zur Aufnahme eines Fahrzeuginsassen vorgesehen ist, nicht von den Gleitbereichen des Kunststoffgleiters überdeckt ist. In dieser Endlage liegt dann der vorzugsweise aus Metall bestehende Führungszapfen dann unmittelbar an der vorzugsweise ebenfalls aus Metall bestehenden Führungskulisse an, so dass die Anordnung eine entsprechende Stabilität aufweist, insbesondere keine Beschädigung des Kunststoffgleiters bei großen Belastungen zu befürchten ist. Für eine sichere Aufnahme des jeweiligen Führungszapfens in dem besagten Endabschnitt weist dieser vorzugsweise entsprechend angeformte Stützflächen auf und verjüngt sich zum Ende der Führungskulisse hin.

Weitere Merkmale und Vorteile der Erfindung werden bei der nachfolgenden Beschreibung eines Ausführungsbeispiels anhand der Figuren deutlich werden.

Es zeigen:
- Figur 1a -: eine perspektivische Darstellung eines in Gebrauchsposition befindlichen Kraftfahrzeugsitzes mit einer Rückenlehne und einer Sitzwanne, dessen Sitzlängsposition mittels einer Sitzlängsführung verstellbar ist;
- Figur 1b -: den Kraftfahrzeugsitz aus Figur 1a ohne Sitzwanne;
- Figur 2 -: den Kraftfahrzeugsitz aus den Figuren 1a und 1b nach einer Verstellung der Sitzlängsposition;
- Figur 3a -: eine Explosionsdarstellung einer Sitzlängsführung aus den Figuren 1a und 1b;
- Figur 3b -: eine perspektivische Darstellung eines Ausschnittes der Sitzlängsführung aus Figur 3a.

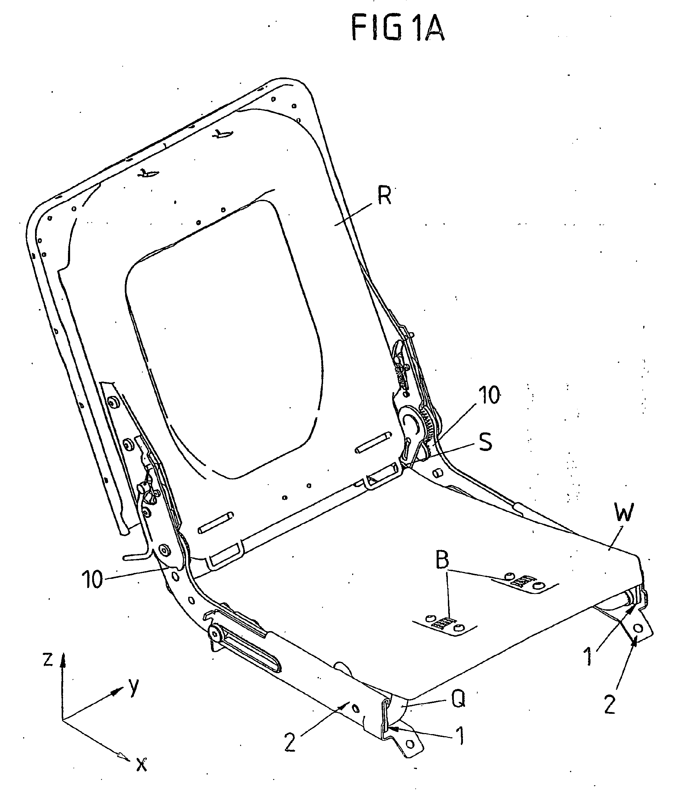

In Figur 1a ist ein Kraftfahrzeugsitz dargestellt, der eine Sitzwanne W zur Aufnahme eines Sitzpolsters aufweist, auf dem ein Fahrzeuginsasse Platz nehmen kann, sowie eine Rückenlehne R, die zum Abstützen des Rückens eines auf dem Fahrzeugsitz befindlichen Insassen dient.

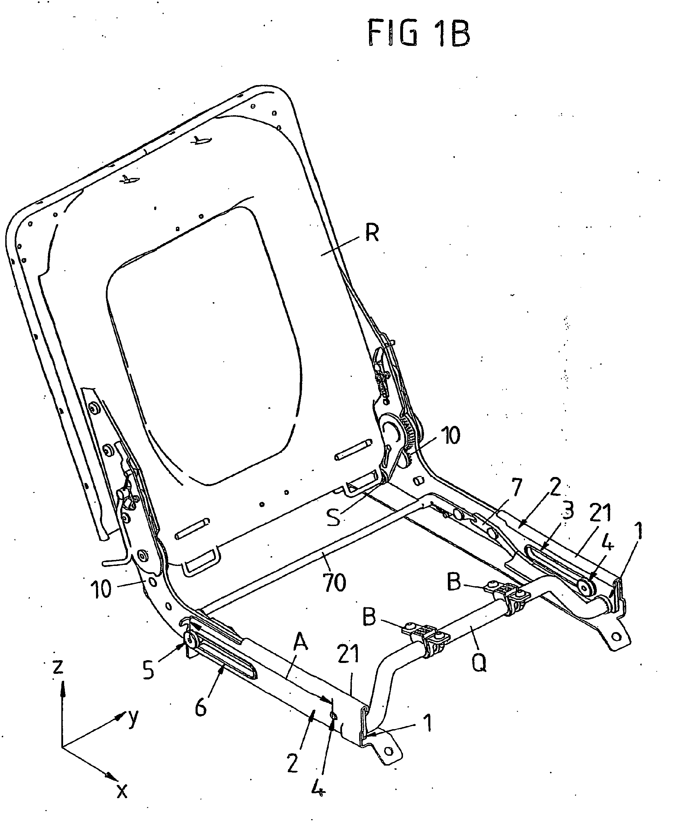

Die Sitzwanne W verläuft zwischen zwei Seitenteilen 1 des Sitzes, die sich an den beiden Längsseiten der Sitzwanne W jeweils in Sitzlängsrichtung x erstrecken. Unter der Sitzlängsrichtung x wird dabei diejenige Richtung verstanden, entlang der sich die Oberschenkel eines auf dem entsprechenden Fahrzeugsitz in Normalposition sitzenden Insassen erstrecken. Die beiden Sitzseitenteile 1 sind über ein Querrohr Q miteinander verbunden, welches Befestigungsstellen B zur Befestigung der Sitzwanne W am Querrohr Q im Bereich ihres vorderen Endes aufweist, vgl. Figur 1b. Dieses Querrohr Q erstreckt sich horizontal entlang einer Richtung y senkrecht zur Sitzlängsrichtung x.

Unter dem vorderen Ende der Sitzwanne W wird vorliegend - in Sitzlängsrichtung x betrachtet - jeweils das von der Rückenlehne R beabstandete Ende der Sitzwanne W verstanden. Als hinteres Ende der Sitzwanne W wird dasjenige Ende verstanden, in dessen Bereich die Rückenlehne R nach oben vom Sitzuntergestell absteht.

Die beiden Seitenteile 1 definieren ferner eine Lagerachse S, auf der die Sitzwanne W im Bereich ihres hinteren Endes gelagert ist. Diese erstreckt sich entlang einer horizontalen Richtung y senkrecht zur Sitzlängsrichtung x.

Darüber hinaus weisen die beiden in Sitzlängsrichtung x erstreckten Sitzseitenteile 1 im Bereich ihres hinteren Endes einen nach oben abstehenden Endabschnitt 10 auf, der als Lehnenträger für die Rückenlehne R dient und an dem die Rückenlehne R schwenkbar angelenkt ist. Die Rückenlehne erstreckt sich dabei in ihrer in Figur 1a gezeigten Gebrauchsposition, in der sie zum Abstützen des Rückens eines Fahrzeuginsassen dienen kann, entlang einer vertikalen Achse z im Wesentlichen senkrecht zur Sitzlängsrichtung x sowie zur horizontalen Querachse y.

Die beiden Sitzseitenteile 1, zwischen denen die Sitzwanne W aufgenommen ist, sind in jeweils einem weiteren, äußeren, karosseriebodenfest anzuordnenden Seitenteil 2 in Sitzlängsrichtung x verschieblich gelagert; wie nachfolgend anhand Figur 1b im Einzelnen erläutert werden wird.

Figur 1b zeigt den Kraftfahrzeugsitz aus Figur 1a ohne Sitzwanne W, so dass die Einzelheiten der Führungseinrichtung, mittels der die die Sitzwanne W aufnehmenden inneren Seitenteile 1 relativ zu den karosseriebodenfest anzuordnenden äußeren Seitenteilen 2 in Sitzlängsrichtung x verschiebbar sind, erkennbar werden.

In den Figuren 1a und 1b befinden sich dabei die inneren Seitenteile 1 bezüglich der äußeren Seitenteile 2 in einer hinteren Position, die einer Gebrauchsposition des Kraftfahrzeugsitzes entspricht. Das heißt, in dieser Position, in der der Fahrzeugsitz mittels eines Verriegelungshebels 7 verriegelbar ist, ist er geeignet zur Aufnahme eines Fahrzeuginsassen. Durch Verschiebung der beiden inneren Seitenteile 1 aus der in den Figuren 1a und 1b gezeigten Position heraus in Sitzlängsrichtung x nach vorne werden die Sitzwanne W und die Rückenlehne R gemeinsam mit den inneren Seitenteilen 1 nach vorne verschoben. Hierdurch kann hinter dem Fahrzeugsitz, bei dem es sich insbesondere um einen Rücksitz eines Kraftfahrzeugs handeln kann, zusätzlicher Transportraum zur Verfügung gestellt. Handelt es sich bei dem Fahrzeugsitz um einen Sitz der zweiten Reihe in einem Kraftfahrzeug mit insgesamt drei Sitzreihen, so kann durch die Vorverlagerung der Sitzwanne W und der Rückenlehne R das Einsteigen von Passagieren im Bereich der dritten Sitzreihe erleichtert werden. Die inneren und äußeren Seitenteile 1, 2 bilden also Führungselemente, die eine Verschiebung von Sitzwanne W und Rückenlehne R in Sitzlängsrichtung x gestatten. Die äußeren Seitenteile 2 übergreifen dabei die inneren Seitenteile 1 mittels eines umgelegten oberen Endabschnittes 21.

Gemäß Figur 1b weist die Führungseinrichtung, mittels der die inneren Seitenteile 1 relativ zu den äußeren Seitenteilen 2 verschiebbar sind, in jedem Paar von Seitenteilen 1, 2 jeweils zwei in Sitzlängsrichtung x hintereinander angeordnete Kulissenführungen 3, 4 bzw. 5, 6 auf, die aus jeweils einer Führungskulisse 3 bzw. 6 und einem in der jeweiligen Führungskulisse 3 bzw. 6 geführten Bolzen 4 bzw. 5 bestehen. Eine Besonderheit des in Figur 1b dargestellten Fahrzeugsitzes besteht dabei darin, dass bei der jeweiligen in Sitzlängsrichtung vorderen Kulissenführung 3, 4 die Führungskulisse 3 am inneren Seitenteil 1 und der zugeordnete Führungszapfen in Form eines Führungsbolzens 4 am äußeren Seitenteil 2 angeordnet ist, während die in Sitzlängsrichtung hinteren Kulissenführungen 5, 6 jeweils durch eine am äußeren Seitenteil 2 ausgebildete Führungskulisse 6 und einen am inneren Seitenteil 1 angeordneten Führungsbolzen 5 gebildet werden.

Das heißt, bei den hinteren Kulissenführungen 5, 6 ist verglichen mit den vorderen Kulissenführungen 3, 4 jeweils die Zuordnung von Führungsbolzen und Führungskulisse zu dem inneren bzw. äußeren Sitzseitenteil vertauscht. Dies hat zur Folge, dass in dem in den Figuren 1a und 1b dargestellten Gebrauchszustand des Fahrzeugsitzes, in dem die inneren Seitenteile 1 bezüglich der äußeren Seitenteile 2 in ihre hinterste Endposition verschoben sind, die vorderen Bolzen 4 jeweils am vorderen Ende der zugeordneten Kulissenführung 3 anliegen und bei den hinteren Kulissenführungen 5, 6 die Bolzen 5 jeweils am hinteren Ende der zugeordneten Kulissenführung 6 anliegen. Dadurch weisen die in Sitzlängsrichtung x an jeder Längsseite des Fahrzeugsitzes hintereinander angeordneten Führungsbolzen 4, 5 einen maximalen Abstand A in Sitzlängsrichtung x auf, was eine verbesserte Stabilität der Anordnung gegenüber Drehmomentbelastungen zur Folge hat.

Bei einer konventionellen Führungseinrichtung, bei der beispielsweise alle Führungsbolzen jeweils an den inneren Seitenteilen 1 und alle Führungskulissen an den äußeren Seitenteilen 2 angebracht wären, befänden sich die Führungsbolzen demgegenüber in dem in Figur 1b gezeigten Zustand des Fahrzeugsitzes beide jeweils am hinteren Ende der zugeordneten Führungskulisse an. Hierdurch wären der Abstand zwischen den Führungsbolzen entlang der Sitzlängsrichtung x erheblich geringer.

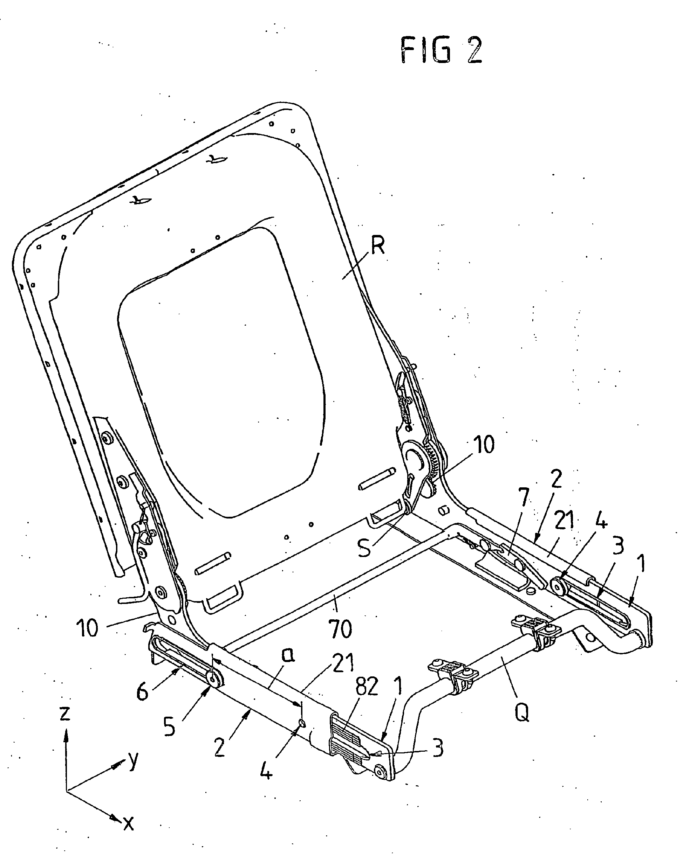

Figur 2 zeigt den Fahrzeugsitz aus den Figuren 1a und 1b nach einer maximalen Vorverlagerung der inneren Seitenteile 1 in Sitzlängsrichtung nach vorne (zusammen mit der jeweiligen vordern Führungskulisse 3 und dem jeweiligen hinteren Führungsbolzen 5). Hierzu sind zuvor die Verriegelungshebel 7 mittels einer in Verriegelungsrichtung angefederten Entriegelungsstange 70 entriegelt worden, um die Vorverlagerung der inneren Seitenteile 1 bezüglich der äußeren Seitenteile 2 zu ermöglichen.

Anhand Figur 2 wird deutlich, dass in dem vorverlagerten Zustand der inneren Seitenteile 1 (und damit auch der Sitzwanne W und der Rückenlehne R) die vorderen Führungsbolzen 4 jeweils am hinteren Ende der zugeordneten Führungskulisse 3 anliegen und die hinteren Führungsbolzen 5 jeweils am vorderen Ende der zugeordneten Führungskulisse 6 anliegen. Hierdurch besteht - verglichen mit der in den Figuren 1a und 1b dargestellten Gebrauchsposition des Fahrzeugsitzes - ein deutlich geringerer Abstand a zwischen den vorderen und hinteren Führungsbolzen 4, 5 in Sitzlängsrichtung x. Dies ist deswegen unbedenklich, weil der Kraftfahrzeugsitz in der in Figur 2 dargestellten, vorverlagerten Sitzposition nicht zur Aufnahme eines Fahrzeuginsassen dient, sondern vielmehr lediglich zur Schaffung eines vergrößerten Stauraumes hinter dem Fahrzeugsitz bzw. zur Erleichterung des Einsteigens von Fahrzeuginsassen hinter dem Fahrzeugsitz.

Im Ergebnis bewegen sich die Führungsbolzen 4, 5 aufeinander zu, wenn die inneren Seitenteile 1 aus der Gebrauchslage heraus nach vorne verschoben werden, und bewegen sich wieder voneinander weg, wenn die inneren Seitenteile 1 wieder in die in den Figuren 1a und 1b gezeigte Gebrauchslage zurückverschoben werden.

Um zu verhindern, dass der Kraftfahrzeugsitz, z.B. durch ein auf dem entsprechenden Sitz sitzendes Kind, missbräuchlich aus der in den Figuren 1a und 1b dargestellten Gebrauchsposition heraus in die in Figur 2 gezeigte vorverlagerte Position verschoben wird, kann nach einer Weiterbildung der Erfindung der Entriegelungshebel (in Form einer Entriegelungsstange 70) für einen Insassen nur bei auf die Sitzwanne W vorgeklappter Rückenlehne R zugänglich sein. Der Kraftfahrzeugsitz lässt sich in diesem Fall nur dann aus seiner Gebrauchsposition heraus vorverlagern, wenn die Rückenlehne R zur Schaffung zusätzlichen Transportraumes auf die Sitzwanne W vorgeklappt ist. Diese bevorzugte Weiterbildung der Erfindung ist selbstverständlich nur bei solchen Kraftfahrzeugsitzen anwendbar, bei denen die Rückenlehne in üblicher Weise auf die Sitzfläche vorklappbar ist.

Um gänzlich auszuschließen, dass ein Insasse in der in Figur 2 gezeigten vorverlagerten Position auf dem Kraftfahrzeugsitz Platz nimmt, kann die auf die Sitzwanne vorgeklappte Rückenlehne in der vorverlagerten Position des Sitzes derart verriegelbar sein, dass sie sich erst nach einem Zurückschieben in ihre Gebrauchsposition (gemäß den Figuren 1a und 1b) wieder entriegeln und hochklappen lässt.

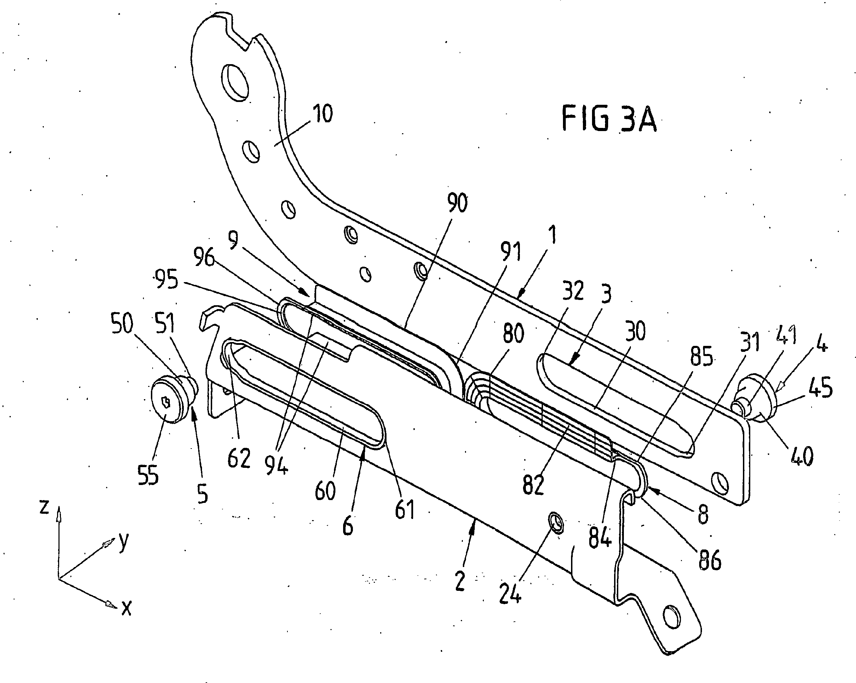

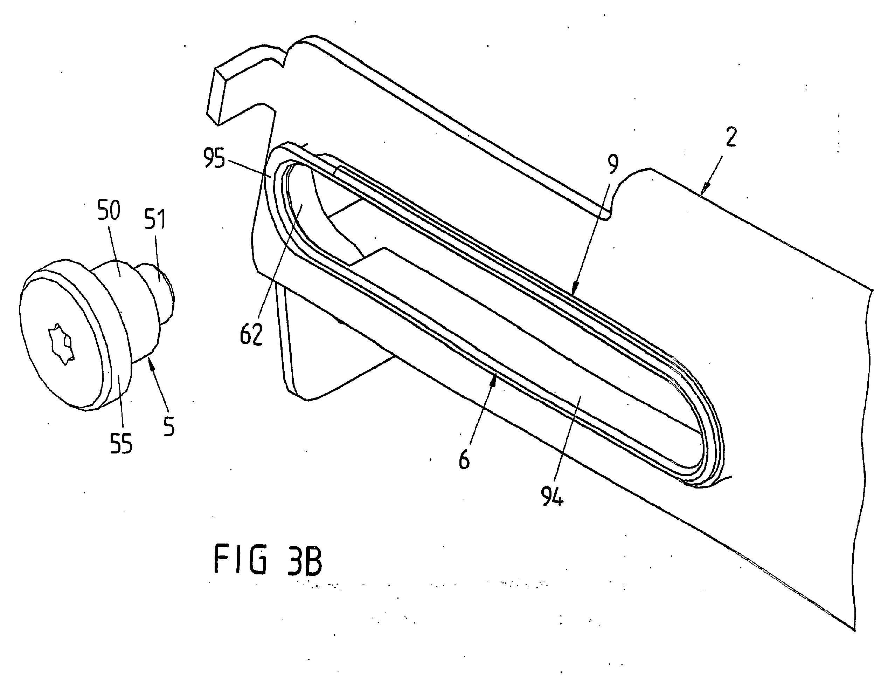

Anhand der Figuren 3a und 3b ist am Beispiel eines inneren Seitenteils 1 und eines äußeren Seitenteils 2 der Aufbau der jeweiligen Führungseinrichtung detailliert dargestellt.

Jede Führungseinrichtung umfasst eine vordere Kulissenführung 3, 4 und eine hintere Kulissenführung 5, 6, wobei die vordere Kulissenführung 3, 4 aus einer am inneren Seitenteil 1 ausgebildeten Führungskulisse 3 und einem an einer Befestigungsstelle 24 am äußeren Seitenteil 2 befestigten Führungsbolzen 4 besteht und die jeweilige hintere Kulissenführung 5, 6 aus einer am äußeren Seitenteil 2 ausgebildeten Führungskulisse 6 und einem am inneren Seitenteil 1 befestigten Führungsbolzen 5 besteht.

Die Führungsbolzen 4, 5 weisen an einem axialen Ende jeweils einen Befestigungsabschnitt 41 bzw. 51 auf, mit dem sie am zugeordneten Seitenteil 2 bzw. 1 befestigt sind, und sind am anderen axialen Ende mit jeweils einem Kopf 45 bzw. 55 versehen, mit dem sie aus der jeweiligen Führungskulisse 3 bzw. 6 hinausragen. Zwischen dem Befestigungsabschnitt 41, 51 und dem jeweiligen Kopf 45 bzw. 55 erstreckt sich als Verbindungsabschnitt ein Gleitabschnitt 40 bzw. 50, mit dem der jeweilige Führungsbolzen 4, 5 in der zugeordneten Führungskulisse 3 bzw. 6 gleiten kann.

Um die Gleitbewegung der Führungsbolzen 4, 5 in der jeweils zugeordneten Führungskulisse 3 bzw. 6 zwischen deren vorderen und hinteren Enden 31, 32 bzw. 61, 62 zu erleichtern, ist in die Führungskulissen 3, 6 jeweils ein aus Kunststoff bestehender Gleiter 8 bzw. 9 eingesetzt. der einen umlaufenden Befestigungsrahmen 86 bzw. 96 aufweist.

Die Gleitbereiche 80 bzw. 90 des jeweiligen Gleiters 8, 9 umfassen einerseits einander entlang der vertikalen Achse z gegenüberliegende Gleitflächen 84 bzw. 94, zwischen denen die Führungsbolzen 4 bzw. 5 mit ihren Gleitabschnitten 40, 50 geführt sind und an denen sie sich entlang der vertikalen Achse z abstützen. Darüber hinaus weisen die Gleitbereiche 80, 90 der Gleiter 8, 9 jeweils eine Gleitfläche 82 bzw. 91 auf, die weg von der jeweiligen Führungskulisse 3 bzw. 6 in Richtung auf das jeweils andere Seitenteil 2 bzw. 1 weist. Auf diesen Gleitflächen 82 bzw. 91 gleitet das jeweils andere Seitenteil 2 bzw.1 beim Verschieben der inneren Seitenteile 1 bezüglich der äußeren Seitenteile 2.

Schließlich bilden die Befestigungsrahmen 86 bzw. 96 der Gleiter 8, 9 noch jeweils eine Gleitfläche 85 bzw. 95, die weg von der jeweiligen Führungskulisse 3, 4 in Richtung auf den Kopf 45 bzw. 55 des jeweils zugeordneten Führungsbolzens 4 bzw. 5 weist. Hierdurch stützen sich die Führungsbolzen 4, 5 an diesen Gleitflächen 85, 95 entlang der Querachse y an den Gleitern 8, 9 jeweils entgegengesetzt zu der Richtung ab, entlang der sich das jeweils andere Seitenteil 2 bzw. 1 an der hierfür vorgesehenen Gleitfläche 82 bzw. 91 des jeweiligen Gleiters 8, 9 entlang der horizontalen Querachse y abstützt.

Anhand der Figuren 3a und 3b ist weiter erkennbar, dass sich die vordere Führungskulisse 3 im Bereich ihres vorderen Ende 31 und die hintere Führungskulisse 6 im Bereich ihres hinteren Ende 62 verjüngt. Ferner weist der der vorderen Führungskulisse 3 zugeordnete Gleiter 8 im Bereich seines vorderen Endes keine Gleitflächen 84 für eine vertikale Abstützung des zugehörigen Bolzens 4 auf und der der hinteren Führungskulisse 6 zugeordnete Gleiter 9 im Bereich seines hinteren Endes keine der vertikalen Abstützung des zugeordneten Führungsbolzens 5 dienende Gleitfläche 94 auf, da sich die entsprechenden Gleitflächen 84, 94 jeweils nicht über die gesamte Länge der zugeordneten Führungskulisse 3 bzw. 6 erstrecken.

Dies bedeutet, dass in der in den Figuren 1a und 1b dargestellten Gebrauchsposition des Fahrzeugsitzes, in der dieser zur Aufnahme eines Fahrzeuginsassen vorgesehen ist und in der der vordere Bolzen 4 am vorderen Ende 31 der zugehörigen Führungskulisse 3 anliegt und der hintere Bolzen am hinteren Ende 62 der zugeordneten Führungskulisse 6 anliegt, die Führungsbolzen 4, 5 mit ihren Gleitabschnitten 40, 50 jeweils unmittelbar an der Innenwand 30 bzw. 60 der jeweiligen Führungskulisse 3 bzw. 6 anliegen. Hierdurch wird eine Belastung der aus Kunststoff bestehenden Gleiter 8, 9 durch das erhöhte Gewicht eines mit einem Fahrzeuginsassen belegten Fahrzeugsitzes vermieden. Vielmehr wirken dann die jeweils aus Metall bestehenden Führungsbolzen 4, 5 und die ebenfalls aus Metall bestehenden Innenwände 60, 90 der Führungskulissen 6, 9 unmittelbar aufeinander ein.

Dadurch dass sich die Führungskulissen 3, 6 in ihren nicht von Gleitflächen überdeckten Endabschnitten (im Bereich des vorderen Endes 31 der vorderen Führungskulisse 3 bzw. im Bereich des hinteren Endes 62 der hinteren Führungskulisse 6) jeweils verjüngen, wird für die Führungsbolzen 4, 5 ein möglichst stufenloser Übergang zwischen den Gleitbereichen 80, 90 und den besagten Endabschnitten der jeweiligen Führungskulisse 3, 6 zur Verfügung gestellt.

In einer Weiterbildung der in den Figuren 1a bis 3b gezeigten Anordnung kann vorgesehen sein, dass die vordere und hintere Führungskulisse 3, 6 im Bereich ihrer einander zugewandten Enden 32, 61 in der Gebrauchsposition des Kraftfahrzeugsitzes (vgl. Figuren 1a und 1b) in Sitzlängsrichtung x überlappen. Dies entspricht einer vergrößerten Ausdehnung der Führungskulissen 3, 6 in Sitzlängsrichtung x und eröffnet einen größeren Verschiebeweg der Seitenteile 1, 2 zueinander in Sitzlängsrichtung x. Die Gefahr einer Kollision der Führungsbolzen 4, 5 besteht hierbei nicht, da in der Gebrauchsposition des Kraftfahrzeugsitzes, in der die Führungskulissen 3, 6 überlappen würden, der vordere Führungsbolzen 4 im Bereich des vorderen Endes 31 der vorderen Führungskulisse 3 angeordnet ist und der hintere Führungsbolzen 5 im Bereich des hinteren Endes 62 der hinteren Führungskulisse 6 angeordnet ist. Die Führungsbolzen 4, 5 befinden sich also genau an den dem Überlappungsbereich 32, 61 abgewandten Enden 31, 62 der Führungskulissen 3, 6. Bei einer anschließenden Verschiebung des Kraftfahrzeugsitzes aus der Gebrauchsposition heraus in die in Figur 2 gezeigte vorverlagerte Position bewegen sich zwar die Führungsbolzen 4, 5 aufeinander zu, da der hintere Führungsbolzen 5 zum vorderen Ende 61 der hinteren Führungskulisse 6 gelangt und der vordere Führungsbolzen 4 zum hinteren Ende 32 der vorderen Führungskulisse 3 gelangt; jedoch bewegen sich gleichzeitig die beiden Führungskulissen 3, 6 voneinander weg, so dass die einander zugewandten Enden 32, 61 der Führungskulissen 3, 6 nicht mehr überlappen und die Gefahr einer Kollision der Führungsbolzen 4, 5 nicht besteht

Allerdings müssen im Falle einer Überlappung der Führungskulissen 3, 6 die zugeordneten Gleiter 8, 9 so ausgebildet sein, dass es nicht zu einer Kollision der Gleiter 8, 9 kommt. Hierzu können die Gleiter 8, 9 in den einander zugewandten Endabschnitten entsprechend gestaltet sein, beispielsweise, indem der eine Gleiter 8 nur entlang seiner in vertikaler Richtung unteren Seite mit Gleitflächen versehen ist und der andere Gleiter 9 nur entlang seiner in vertikaler Richtung oberen Seite mit Gleitflächen versehen ist.

## Patentansprüche

1. Sitzlängsführung für einen Kraftfahrzeugsitz mit
- zwei in Sitzlängsrichtung erstreckten, schienenförmigen Führungselementen und
- einer Führungseinrichtung, mittels der das eine Führungselement relativ zu dem anderen Führungselement in Sitzlängsrichtung verschiebbar ist,
wobei die Führungseinrichtung zwei in Sitzlängsrichtung hintereinander angeordnete Kulissenführungen umfasst, die jeweils eine Führungskulisse und einen in der Führungskulisse geführten Führungszapfen aufweisen,
**dadurch gekennzeichnet,**
**dass** die erste Kulissenführung (3, 4) durch eine an der einen Schiene (1) vorgesehene Führungskulisse (3) und einen an der anderen Schiene (2) vorgesehenen Führungszapfen (4) gebildet wird und dass die zweite Kulissenführung (5, 6) durch einen an der einen Schiene (1) vorgesehenen Führungszapfen (5) und einer an der anderen Schiene (2) vorgesehene Führungskulisse (6) gebildet wird.

2. Sitzlängsführung nach Anspruch 1, **dadurch gekennzeichnet, dass** die beiden Führungselemente (1, 2) in Sitzlängsrichtung (x) zwischen einer ersten und einer zweiten Endposition relativ zueinander verschiebbar sind.

3. Sitzlängsführung nach Anspruch 1 oder 2, **dadurch gekennzeichnet, dass** sich die beiden Führungskulissen (3, 6) jeweils zwischen einem in Schienenlängsrichtung (x) vorderen Anschlag (31, 61) und einem in Schienenlängsrichtung (x) hinteren Anschlag (32, 62) erstrecken, dass die Anschläge (31, 32); (61, 62) die Bewegung der Führungszapfen (4, 5) in den Führungskulissen (3, 6) begrenzen.

4. Sitzlängsführung nach Anspruch 3, **dadurch gekennzeichnet, dass** in der einen Endposition der beiden Führungselemente (1, 2) der Führungszapfen (4) der in Schienenlängsrichtung (x) vorderen Kulissenführung (3, 4) am vorderen Anschlag (31) der Führungskulisse (3) anliegt und der Führungszapfen (5) der in Schienenlängsrichtung (x) hinteren Kulissenführung (5, 6) am hinteren Anschlag (62) der Führungskulisse (6) anliegt.

5. Sitzlängsführung nach Anspruch 4, **dadurch gekennzeichnet, dass** in der anderen Endposition der beiden Führungselemente (1, 2) der Führungszapfen (3) der in Sitzlängsrichtung (x) vorderen Kulissenführung (3, 4) am hinteren Anschlag (32) der Führungskulisse (3) anliegt und der Führungszapfen (5) der in Sitzlängsrichtung (x) hinteren Kulissenführung (5, 6) am vorderen Anschlag (61) der Führungskulisse (6) anliegt.

6. Sitzlängsführung nach Anspruch 4 und 5, **dadurch gekennzeichnet, dass** die eine Endposition der Führungselemente (1, 2) einer Gebrauchsposition des Sitzes entspricht, in der dieser zur Benutzung durch einen Fahrzeuginsassen vorgesehen ist, und dass die andere Endposition der Führungselemente (1, 2) einer verlagerten Position des Sitzes entspricht, in der dieser nicht zur Aufnahme eines Fahrzeuginsassen vorgesehen ist.

7. Sitzlängsführung nach einem der vorherigen Ansprüche, **dadurch gekennzeichnet, dass** das eine Führungselement (1) zur Aufnahme eines Polsterträgers (W) eines Kraftfahrzeugsitzes vorgesehen ist und dass das andere Führungselement (2) zur Befestigung an einer bodenseitigen Baugruppe eines Kraftfahrzeugs vorgesehen ist.

8. Sitzlängsführung nach einem der vorherigen Ansprüche, **dadurch gekennzeichnet, dass** die beiden Führungselemente (1, 2) quer zur Sitzlängsrichtung (x) horizontal nebeneinander angeordnet sind und ein inneres und ein äußeres Führungselement (1, 2) bilden.

9. Sitzlängsführung nach einem der vorhergehenden Ansprüche, **dadurch gekennzeichnet, dass** die beiden Führungselemente (1, 2) zur paarweisen Anordnung an den beiden Längsseiten eines Kraftfahrzeugsitzes vorgesehen sind.

10. Sitzlängsführung nach einem der vorhergehenden Ansprüche, **dadurch gekennzeichnet, dass** eine Verriegelungseinrichtung (7) zur Verriegelung der Führungseinrichtung (3, 4; 5, 6) in zumindest einer Sitzlängsposition vorgesehen ist.

11. Sitzlängsführung nach einem der vorhergehenden Ansprüche, **dadurch gekennzeichnet, dass** jeder Führungszapfen (4, 5) in der zugeordneten Führungskulisse (3, 4) entlang der vertikalen Achse (z) senkrecht zur Sitzlängsrichtung (x) abgestützt ist.

12. Sitzlängsführung nach einem der vorhergehenden Ansprüche, **dadurch gekennzeichnet, dass** jeder Führungszapfen (4, 5) am Rand der zugeordneten Führungskulisse (3, 6) entlang der horizontalen Querrichtung (y) senkrecht zur Sitzlängsrichtung (x) abgestützt ist.

13. Sitzlängsführung nach einem der vorhergehenden Ansprüche, **dadurch gekennzeichnet, dass** sich die beiden Führungselemente (1, 2) am Rand jeder Führungskulisse (3, 6) entlang der horizontalen Querrichtung (y) senkrecht zur Sitzlängsrichtung (x) aneinander abstützen.

14. Sitzlängsführung nach einem der vorhergehenden Ansprüche, **dadurch gekennzeichnet, dass** in jeder Führungskulisse (3, 6) ein Gleiter (8, 9) zum Abstützen des jeweiligen Führungszapfens (4, 5) und/oder des jeweils anderen Führungselementes (2, 1) angeordnet ist.

15. Sitzlängsführung nach Anspruch 14, **dadurch gekennzeichnet, dass** jeder Gleiter (8, 9) mindestens eine Stützfläche (84, 94) zum Abstützen des zugeordneten Führungszapfens (4, 5) in vertikaler Richtung und mindestens einer Stützfläche (82, 85; 91, 95) zum Abstützen des jeweiligen Führungszapfen (4, 5) und/oder des jeweils anderen Führungselementes (2, 1) in horizontaler Richtung (y) quer zur Sitzlängsrichtung (x) aufweist.

16. Sitzlängsführung nach Anspruch 15, **dadurch gekennzeichnet, dass** die Stützflächen (82, 84, 85; 91, 94, 95) ein Abstützen in zwei einander entgegengesetzten Richtungen entlang der vertikalen Achse (z) und ein Abstützen in zwei einander entgegengesetzten Richtungen entlang der horizontalen Achse (y) senkrecht zur Sitzlängsrichtung (x) ermöglichen.

17. Sitzlängsführung nach einem der Ansprüche 14 bis 16, **dadurch gekennzeichnet, dass** die Gleiter (8, 9) aus Kunststoff bestehen.

18. Sitzlängsführung nach einem der Ansprüche 14 bis 17, **dadurch gekennzeichnet, dass** sich die Gleiter (8, 9) mit zumindest einem Teil ihrer Gleitbereiche (80, 90) in Sitzlängsrichtung (x) jeweils nur über einen Teil der Ausdehnung der jeweiligen Führungskulisse (3, 6) erstrecken.

19. Sitzlängsführung nach Anspruch 18, **dadurch gekennzeichnet, dass** in zumindest einer Endposition, insbesondere einer als Gebrauchsposition dienenden Endposition, der beiden Führungselemente (1, 2) die Führungszapfen (4, 5) entlang der vertikalen Achse (z) nicht am jeweiligen Gleiter (8, 9) abgestützt sind.

20. Sitzlängsführung nach Anspruch 19, **dadurch gekennzeichnet, dass** die Führungszapfen (4, 5) in der ersten Endposition der Führungselemente (1, 2) entlang der vertikalen Achse (z) nicht am jeweiligen Gleiter (8, 9) abgestützt sind.

21. Sitzlängsführung nach Anspruch 19 oder 20, **dadurch gekennzeichnet, dass** sich jede Führungskulisse (3, 6) in dem Endabschnitt (31, 62) verjüngt, der frei von Gleitbereichen (80, 90) des jeweiligen Gleiters (8, 9) ist, um einen stufenlosen Übergang zwischen den Gleitbereichen (80, 90) und dem jeweiligen Endabschnitt (31, 62) der Führungskulisse (3, 6) zu schaffen.

22. Sitzlängsführung nach einem der vorhergehenden Ansprüche, **dadurch gekennzeichnet, dass** die Führungselemente (1, 2) und die Führungszapfen (4, 5) aus Metall bestehen.

23. Kraftfahrzeugsitz mit einer Rückenlehne und mit einer Sitzlängsführung nach einem der vorhergehenden Ansprüche.

24. Kraftfahrzeugsitz nach Anspruch 23, **dadurch gekennzeichnet, dass** die Rückenlehne (R) aus mindestens einer aufrechten Position heraus, in der sie zum Abstützen des Rückens eines Fahrzeuginsassen dient, in Richtung auf das Sitzuntergestell des Fahrzeugsitzes vorklappbar ist.

25. Kraftfahrzeugsitz nach Anspruch 24 mit einer Sitzlängsführung nach Anspruch 10, **dadurch gekennzeichnet, dass** der Verriegelungseinrichtung (7) ein Entriegelungselement (70) zugeordnet ist und dass das Entriegelungselement (70) nur dann für eine Entriegelung der Verriegelungseinrichtung (7) zugänglich ist, wenn die Rückenlehne (R) vorgeklappt ist.

26. Kraftfahrzeugsitz nach Anspruch 24 oder 25, **dadurch gekennzeichnet, dass** die Rückenlehne (R) in ihrer vorgeklappten Position verriegelbar ist und dass die Rückenlehne ( R) nur dann zum Hochklappen in ihre aufrechte Position entriegelbar ist, wenn sich die Sitzlängsführung in der Gebrauchsposition befindet.

## Claims

1. Longitudinal guide for a motor vehicle seat, with
- two rail-shaped guide elements extending in the longitudinal direction of the seat, and
- a guide device by means of which one guide element can be displaced in the longitudinal direction of the seat relative to the other guide element,
wherein the guide device comprises two slotted guide mechanisms which are arranged one behind the other in the longitudinal direction of the seat and which each have a guide slot and a guide pin guided in the guide slot,
**characterized in that** the first slotted guide mechanism (3, 4) is formed by a guide slot (3) provided on the one rail (1) and a guide pin (4) provided on the other rail (2), and **in that** the second slotted guide mechanism (5, 6) is formed by a guide pin (5) provided on the one rail (1) and a guide slot (6) provided on the other rail (2).

2. Longitudinal seat guide according to Claim 1, **characterized in that** the two guide elements (1, 2) can be displaced relative to each other in the longitudinal direction (x) of the seat between a first and a second end position.

3. Longitudinal seat guide according to Claim 1 or 2, **characterized in that** the two guide slots (3, 6) each extend between a front stop (31, 61) in the longitudinal direction (x) of the rail and a rear stop (32, 62) in the longitudinal direction (x) of the rail, and **in that** the stops (31, 32); (61, 62) restrict the movement of the guide pins (4, 5) in the guide slots (3, 6).

4. Longitudinal seat guide according to Claim 3, **characterized in that,** in the one end position of the two guide elements (1, 2), the guide pin (4) of the front slotted guide mechanism (3, 4) in the longitudinal direction (x) of the rail bears against the front stop (31) of the guide slot (3), and the guide pin (5) of the rear slotted guide mechanism (5, 6) in the longitudinal direction (x) of the rail bears against the rear stop (62) of the guide slot (6).

5. Longitudinal seat guide according to Claim 4, **characterized in that,** in the other end position of the two guide elements (1, 2), the guide pin (3) of the front slotted guide mechanism (3, 4) in the longitudinal direction (x) of the seat bears against the rear stop (32) of the guide slot (3), and the guide pin (5) of the rear slotted guide mechanism (5, 6) in the longitudinal direction (x) of the seat bears against the front stop (61) of the guide slot (6).

6. Longitudinal seat guide according to Claims 4 and 5, **characterized in that** the one end position of the guide elements (1, 2) corresponds to a use position of the seat, in which said seat is provided for use by a vehicle occupant, and **in that** the other end position of the guide elements (1, 2) corresponds to a displaced position of the seat, in which said seat is not provided for receiving a vehicle occupant.

7. Longitudinal seat guide according to one of the preceding claims, **characterized in that** the one guide element (1) is provided for receiving a cushion support (W) of a motor vehicle seat, and **in that** the other guide element (2) is provided for fastening to an assembly on the floor of a motor vehicle.

8. Longitudinal seat guide according to one of the preceding claims, **characterized in that** the two guide elements (1, 2) are arranged horizontally next to each other transversely with respect to the longitudinal direction (x) of the seat and form an inner and an outer guide element (1, 2).

9. Longitudinal seat guide according to one of the preceding claims, **characterized in that** the two guide elements (1, 2) are provided for arrangement in pairs on both longitudinal sides of a motor vehicle seat.

10. Longitudinal seat guide according to one of the preceding claims, **characterized in that** a locking device (7) is provided for locking the guide device (3, 4; 5, 6) in at least one longitudinal position of the seat.

11. Longitudinal seat guide according to one of the preceding claims, **characterized in that e**ach guide pin (4, 5) is supported in the associated guide slot (3, 4) along the vertical axis (z) perpendicularly with respect to the longitudinal direction (x) of the seat.

12. Longitudinal seat guide according to one of the preceding claims, **characterized in that** each guide pin (4, 5) is supported on the edge of the associated guide slot (3, 6) along the horizontal transverse direction (y) perpendicularly with respect to the longitudinal direction (x) of the seat.

13. Longitudinal seat guide according to one of the preceding claims, **characterized in that** the two guide elements (1, 2) are supported against each other on the edge of each guide slot (3, 6) along the horizontal transverse direction (y) perpendicularly with respect to the longitudinal direction (x) of the seat.

14. Longitudinal seat guide according to one of the preceding claims, **characterized in that** a slider (8, 9) for supporting the respective guide pin (4, 5) and/or the respectively other guide element (2, 1) is arranged in each guide slot (3, 6).

15. Longitudinal seat guide according to Claim 14, **characterized in that** each slider (8, 9) has at least one supporting surface (84, 94) for supporting the associated guide pin (4, 5) in the vertical direction and at least one supporting surface (82, 85; 91, 95) for supporting the respective guide pin (4, 5) and/or the respectively other guide element (2, 1) in the horizontal direction (y) transversely with respect to the longitudinal direction (x) of the seat.

16. Longitudinal seat guide according to Claim 15, **characterized in that** the supporting surfaces (82, 84, 85; 91, 94, 95) permits support in two mutually opposite directions along the vertical axis (z) and supporting two mutually opposite directions along the horizontal axis (y) perpendicularly with respect to the longitudinal direction (x) of the seat.

17. Longitudinal seat guide according to one of Claims 14 to 16, **characterized in that** the sliders (8, 9) are composed of plastic.

18. Longitudinal seat guide according to one of claims 14 to 17, **characterized in that** the sliders (8, 9), with at least part of the sliding regions (80, 90) thereof, each extend in the longitudinal direction (x) of the seat only over part of the extent of the respective guide slot (3, 6).

19. Longitudinal seat guide according to Claim 18, **characterized in that,** in at least one end position, in particular an end position serving as the use position, of the two guide elements (1, 2), the guide pins (4, 5) are not supported on the respective slider (8, 9) along the vertical axis (z).

20. Longitudinal seat guide according to Claim 19, **characterized in that,** in the first end position of the guide elements (1, 2), the guide pins (4, 5) are not supported on the respective slider (8, 9) along the vertical axis (z).

21. Longitudinal seat guide according to Claim 19 or 20, **characterized in that** each guide slot (3, 6) tapers in the end section (31, 62) which is free from sliding regions (80, 90) of the respective slider (8, 9) in order to provide a stepless transition between the sliding regions (80, 90) and the respective end section (31, 62) of the guide slot (3, 6).

22. Longitudinal seat guide according to one of the preceding claims, **characterized in that** the guide elements (1, 2) and the guide pins (4, 5) are composed of metal.

23. Motor vehicle seat with a backrest and a longitudinal seat guide according to one of the preceding claims.

24. Motor vehicle seat according to Claim 23, **characterized in that** the backrest (R) can be folded forwards from at least one upright position, in which it serves to support a seat occupant's back, in the direction of the underframe of the vehicle seat.

25. Motor vehicle seat according to Claim 24 with a longitudinal seat guide according to Claim 10, **characterized in that** the locking device (7) is assigned an unlocking element (70), and **in that** the unlocking element (70) is only accessible for unlocking the locking device (7) when the backrest (R) is folded forwards.

26. Motor vehicle seat according to Claim 24 or 25, **characterized in that** the backrest (R) can be locked in its folded-forwards position, and **in that** the backrest (R) can only be unlocked for raising into its upright position when the longitudinal seat guide is in the use position.

## Revendications

1. Dispositif de guidage longitudinal pour un siège de véhicule automobile, comprenant :
- deux éléments de guidage en forme de rail, s'étendant dans la direction longitudinale du siège, et
- un système de guidage, au moyen duquel l'un des éléments de guidage est déplaçable par rapport à l'autre élément de guidage dans la direction longitudinale du siège,
dans lequel le système de guidage comprend deux guidages à glissière agencés l'un derrière l'autre en direction longitudinale du siège, qui comprennent chacun une glissière de guidage et un tenon de guidage guidé dans la glissière de guidage,
**caractérisé en ce que**
le premier guidage à glissière (3, 4) est formé par une glissière de guidage (3) prévue sur l'un des rails (1), et par un tenon de guidage (4) prévu sur l'autre rail (2), et **en ce que** le second guidage à glissière (5, 6) est formé par un tenon de guidage (5) prévu sur l'un des rails (1) et par une glissière de guidage (6) prévue sur l'autre rail.

2. Dispositif de guidage longitudinal de siège selon la revendication 1, **caractérisé en ce que** les deux éléments de guidage (1, 2) sont déplaçables l'un par rapport à l'autre dans la direction longitudinale du siège (x) entre une première position finale et une seconde position finale.

3. Dispositif de guidage longitudinal de siège selon la revendication 1 ou 2, **caractérisé en ce que** les deux glissières de guidage (3, 6) s'étendent chacune entre une butée avant (31, 61), dans la direction longitudinale du rail (x), et une butée arrière (32, 62), dans la direction longitudinale du rail (x), et **en ce que** les butées (31, 32) ; (61, 62) limitent le déplacement du tenon de guidage (4, 5) dans les glissières de guidage (3, 6).

4. Dispositif de guidage longitudinal de siège selon la revendication 3, **caractérisé en ce que**, dans l'une des positions finales des deux éléments de guidage (1,2), le tenon de guidage (4) du guidage à coulisse (3, 4) avant, dans la direction longitudinale du siège (x), est appliqué contre la butée avant (31) de la glissière de guidage (3), et le tenon de guidage (5) du guidage à glissière (5, 6) arrière dans la direction longitudinale du siège (x), est appliqué contre la butée arrière (62) de la glissière de guidage (6).

5. Dispositif de guidage longitudinal de siège selon la revendication 4, **caractérisé en ce que** dans l'autre des positions finales des deux éléments de guidage (1,2), le tenon de guidage (3) du guidage à coulisse (3,4) avant, dans la direction longitudinale du siège (x), est appliqué contre la butée arrière (32) de la glissière de guidage (3) et le tenon de guidage (5) du guidage à glissière (5,6) arrière dans la direction longitudinale du siège (x), est appliqué contre la butée avant (61) de la glissière de guidage (6).

6. Dispositif de guidage longitudinal de siège selon la revendication 4 et 5, **caractérisé en ce que** l'une des positions terminales des éléments de guidage (1, 2) correspond à une position d'utilisation du siège, dans laquelle celui-ci est prévu pour l'utilisation par un occupant du véhicule, et **en ce que** l'autre position terminale des éléments de guidage (1, 2) correspond à une position déportée du siège, dans laquelle celui-ci n'est pas prévu pour recevoir un occupant du véhicule.

7. Dispositif de guidage longitudinal de siège selon l'une des revendications précédentes, **caractérisé en ce que** l'un des éléments de guidage (1) est prévu pour recevoir un support de rembourrage (W) d'un siège de véhicule automobile, et **en ce que** l'autre élément de guidage (2) est prévu pour être fixé sur un groupe structurel, côté plancher, d'un véhicule automobile.

8. Dispositif de guidage longitudinal de siège selon l'une des revendications précédentes, **caractérisé en ce que** les deux éléments de guidage (1, 2) sont agencés, transversalement à la direction longitudinale du siège (x), horizontalement l'un à côté de l'autre, et constituent un élément de guidage intérieur et un élément de guidage extérieur (1, 2).

9. Dispositif de guidage longitudinal de siège selon l'une des revendications précédentes, **caractérisé en ce que** les deux éléments de guidage (1, 2) sont prévus pour être agencés par paires sur les deux grands côtés d'un siège de véhicule.

10. Dispositif de guidage longitudinal de siège selon l'une des revendications précédentes, **caractérisé en ce qu'**il est prévu un moyen de verrouillage (7) pour verrouiller le dispositif de guidage (3, 4 ; 5, 6) dans au moins une position longitudinale du siège.

11. Dispositif de guidage longitudinal de siège selon l'une des revendications précédentes, **caractérisé en ce que** chaque tenon de guidage (4, 5) est soutenu dans la glissière de guidage associée (3, 4) le long de l'axe vertical (z) perpendiculairement à la direction longitudinale du siège.

12. Dispositif de guidage longitudinal de siège selon l'une des revendications précédentes, **caractérisé en ce que** chaque tenon de guidage (4, 5) est soutenu au bord de la glissière de guidage associée (3, 6) le long de la direction transversale horizontale (y) perpendiculairement à la direction longitudinale du siège (x).

13. Dispositif de guidage longitudinal de siège selon l'une des revendications précédentes, **caractérisé en ce que** les deux éléments de guidage (1, 2) se soutiennent mutuellement à la bordure de chaque glissière de guidage (3, 6) le long de la direction transversale horizontale (y) perpendiculairement à la direction de déplacement du siège (x).

14. Dispositif de guidage longitudinal de siège selon l'une des revendications précédentes, **caractérisé en ce qu'**un patin coulissant (8, 9) est agencé dans chaque glissière de guidage (3, 6) pour soutenir le tenon de guidage respectif (4, 5) et/ou l'autre élément de guidage respectif (2, 1).

15. Dispositif de guidage longitudinal de siège selon la revendication 14, **caractérisé en ce que** chaque patin coulissant (8, 9) comprend au moins une surface d'appui (84, 94) pour soutenir le tenon de guidage associé (4, 5) en direction verticale et au moins une surface d'appui (82, 85 ; 91, 95) pour soutenir le tenon de guidage respectif (4, 5) et/ou de l'autre élément de guidage respectif (2, 1) en direction horizontale (y) transversalement à la direction longitudinale du siège (x).

16. Dispositif de guidage longitudinal de siège selon la revendication 15, **caractérisé en ce que** les surfaces d'appui (82, 84,85 ; 91, 94, 95) permettent un soutien dans deux directions mutuellement opposées le long de l'axe vertical (z) et un soutien dans deux directions mutuellement opposées le long de l'axe horizontal (y) perpendiculairement à la direction longitudinale du siège (x).

17. Dispositif de guidage longitudinal de siège selon l'une des revendications 14 à 16, **caractérisé en ce que** les patins coulissants (8, 9) sont en matière plastique

18. Dispositif de guidage longitudinal de siège selon l'une des revendications 14 à 17, **caractérisé en ce que** les patins coulissants (8, 9), par au moins une partie de leur région coulissante (80, 90), s'étendent en direction longitudinale du siège (x) uniquement sur une partie de l'extension de la glissière de guidage correspondante (3, 6).

19. Dispositif de guidage longitudinal de siège selon la revendication 18, **caractérisé en ce que,** dans au moins une position terminale, en particulier une position terminale servant de position d'utilisation, des deux éléments de guidage (1,2), les tenants de guidage (4, 5) le long de l'axe vertical (z) ne sont pas soutenus sur le patin coulissant respectif (8, 9).

20. Dispositif de guidage longitudinal de siège selon la revendication 19, **caractérisé en ce que** les tenons de guidage (4, 5), dans la première position finale des éléments de guidage (1, 2) le long de l'axe vertical (z), ne sont pas soutenus sur le patin coulissant respectif (8, 9).

21. Dispositif de guidage longitudinal de siège selon la revendication 19 ou 20, **caractérisé en ce que** chaque glissière de guidage (3, 6) se rétrécit dans le tronçon terminal (31, 62) qui est dépourvu de zone coulissante (80, 90) du patin coulissant respectif (8, 9), pour réaliser une transition sans gradins entre les régions coulissantes (80, 90) et le tronçon terminal respectif (31, 62) de la glissière de guidage (3, 6).

22. Dispositif de guidage longitudinal de siège selon l'une des revendications précédentes, **caractérisé en ce que** les éléments de guidage (1,2) et les tenons de guidage (4, 5) sont réalisés en métal.

23. Siège de véhicule automobile comprenant un dossier, et un dispositif de guidage longitudinal de siège selon l'une des revendications précédentes.

24. Siège de véhicule automobile selon la revendication 23, **caractérisé en ce que** le dossier (R) peut être rabattu depuis au moins une position dressée dans laquelle il sert à soutenir le dos d'un occupant du véhicule, en direction du châssis inférieur du siège automobile.

25. Siège de véhicule automobile selon la revendication 24, comprenant un dispositif de guidage longitudinal de siège, **caractérisé en ce qu'**un élément de déverrouillage (70) est associé au moyen de verrouillage (7), et **en ce que** l'élément de déverrouillage (70) n'est accessible pour un déverrouillage du dispositif de verrouillage (7), que lorsque le dossier (R) est basculé en avant.

26. Siège de véhicule automobile selon la revendication 24 ou 25, **caractérisé en ce que** le dossier (R) peut être verrouillé dans sa position rabattue vers l'avant, et **en ce que** le dossier (R) ne peut être déverrouillé pour le basculer vers le haut dans sa position dressée, que quand le guidage longitudinal de siège se trouve dans la position d'utilisation.
